**Europäisches Patentamt**

**European Patent Office**

**Office européen des brevets**

(19)

(11) Publication number: **0 235 100**
**A2**

(12) # EUROPEAN PATENT APPLICATION

(21) Application number: **87830070.6**

(22) Date of filing: **27.02.87**

(51) Int. Cl.³: **B 21 D 28/22**

(30) Priority: **28.02.86 IT 1958986**

(43) Date of publication of application:
**02.09.87 Bulletin 87/36**

(84) Designated Contracting States:
**AT BE CH DE ES FR GB GR LI LU NL SE**

(71) Applicant: **FRAMAG S.p.A.**
**Via T. Tasso, 13**
**Canegrate (Milan)(IT)**

(71) Applicant: **FRATELLI PEREGO IND. S.p.A.**
**Via Parrocchia, 3**
**Ronco Briantino (Milan)(IT)**

(72) Inventor: **Gussoni, Oliviero**
**Viale Bozzi, 13**
**Busto Arsizio Varese(IT)**

(74) Representative: **Righetti, Giuseppe**
**Bugnion S.p.A. Via Carlo Farini, 81**
**I-20159 Milano(IT)**

(54) **Device to periodically actuate one or more punches in a press.**

(57) The invention relates to a device to periodically actuate one or more punches in a press. Said punches (7) are engaged with the lower part of a disk (15) elastically supported between a guide plate (5) and a support plate (8) fastened to the underneath of a press ram. Coaxial to the disk (15) extends a drive shaft (19) carrying, at the opposite end thereof, a free-wheel (20) connected through an actuating bar (21) to fluid-operated actuating means interlocked to a control unit in order to give the drive shaft (19) a rotational impulsion. Actuating mechanical means (23, 25, 28) acting on the disk (15) carries out, as a result of the rotational impulsion, an operating cycle comprising the steps of arranging the punches (7) in their operating position and, after a predetermined number of strokes of the ram, of returning said punches (7) to their rest position.

FIG. 1

EP 0 235 100 A2

Croydon Printing Company Ltd.

Device to periodically actuate one or more punches

in a press


The present invention relates to a device to periodically actuate one or more punches in a press. More particularly the device in question is adapted to be used in presses designed to make laminations for electrical equipments such as motors, alternators, transformers and the like.


It is known that many electrical equipments consist of parts made up of a plurality of shaped packwise-disposed laminations rigidly connected to each other in order to form a stator or a rotor, for example. In the art all operations necessary to obtain the mutual junction between laminations are usually colled "packing operations".


Presently different methods exist which allow   the obtention of   packwise-disposed laminations. According to one of these methods laminations are individually submitted to simultaneous blanking and drawing operations which give  rise to one or more cut and projecting portions on the surface thereof.


Laminations thus worked are then disposed upon each other in a predetermined amount depending upon the heigh of the

pack it is wished to obtain and then joined to each other by forcibly engaging the projecting portions of each lamination into the spaces existing on the adjoining lamination. In addition, in order to avoid the existence, when the pack is built up, of surface projections on the

- 2 -

laminations forming the pack ends, said laminations are provided with through holes adapted to be engaged by the projections of the adjacent laminations. The ends of said projections will substantially be flush with the outer surface of the pack itself.

The packing method briefly described above uses presses equipped with several operating stations, through which a plate strip is caused to advance stepwise in synchronism with the press movements, from which plate strip the individual laminations and afterwards the packs are obtained. More particularly provision is made for one or more operating stations where holes and shapings are machined on the plate strip depending upon the surface appearance to be exhibited by the finished lamination, an operating station where surface projections are carried out and an operating station where the separation of the individual laminations from the plate strip and the simultaneous packwise arrangement of the same take place. A further station is also provided which operates periodically and is designed to create through holes instead of projections on those laminations that are destined to form the pack ends. In greater detail, in such an operating station punches are provided to be slidably engaged with a guide plate carried by the press ram. When at rest, punches have their respective penetration points hidden inside the guide plate, and are kept in this position by return springs acting between the support plate and the punches themselves.

An actuating device essentially consisting of a cam-shaped element operated by a double effect air cylinder acts on the punch ends opposite those provided with said penetration points. The air cylinder upon impulsion of a control unit associated with the press and suitably programmed, acts in such a way that it causes the cam-shaped element to move sideways each time after a predetermined number of strokes of the ram. As a result of said displacement, punches reach their operating position, that is the penetration points come out of the guide plate.

Under this situation, at each stroke of the ram the piercing of a lamination takes place. After a given number of piercings the air cylinder, always upon command of the control unit, causes the cam-shaped element to return to the initial position and, as a result, punches come back to their rest position.

It is clear from what above that presses hereibefore briefly described are subjected to some drawbacks.

One of said drawbacks is due to the fact that the air cylinders incorporated in the punch-operating devices are sufficiently functional only at relatively reduced operation speeds. In fact at high operation speeds air cylinders are not capable of carrying out the disconnection of punches from their operating position in a sufficiently short time. As a result, a greater quantity of laminations than needed is pierced, which gives rise to production wastes.

In order to reduce said wastes it is therefore necessary to make presses work at a relatively reduced speed. Practically, due to these restrictions, the actual operating speed of presses is about 260 blows per minute, while the same presses could run at a maximum speed of about 760 blows per minute.

A further drawback of the known art is due to the fact that presently used.control units cause punches to be actuated on the basis of the numeral counting of blows carried out by the press ram. Therefore the formation of packs is obtained by using a predetermined number of laminations for each pack depending upon the nominal thickness of the plate strip and the heigth of the packs it is wished to obtain.

Under this situation many packs out of size can be obtain ed due to the fact that the strip is always subjected, over the whole length thereof, to small thickness alterations which, when multiplied by the number of laminations conerned, can remarkably modify the final heigth of the packs themselves.

The object of the present invention is to eliminate the above drawbacks and particularly to provide a device designed to periodically actuate the punches which is capable of running at the same speed as the maximum operating speed of the press with which it is associated or even at a higher speed.

The foregoing and still further objects that will become more apparent in the following are substantially achieved by a device to periodically actuate one or more punches in a press in which the workpiece is interposed between a die supported by a fixed bed and a guide plate connected by the interposition of spring means to a ram provided with reciprocating motion in the direction of said die, said punches slidably crossing the guide plate and being movable from an operating position in which they protrude from the guide plate in the direction of said die, each in the region of a penetration point thereof, to a rest position in which said penetration point is hidden inside said guide plate, characterized in that it comprises a support plate secured underneath the ram and elastically supporting said guide plate, at least two posts fastened to said bed with which the guide plate and support plate slidably engage, a crosspiece rigidly supported by said posts and slidably engaging within a recess provided in said support plate on the same side as the ram, a disk oscillatably engaged between said support plate and said guide plate and supporting said punches on its face oriented towards the guide plate, a drive shaft coaxially and rigidly engaged with said disk on the side thereof opposite said punches and slidably crossing said crosspiece, a free-wheel mounted on said drive shaft and connected through an actuating bar to fluid-operated actuating means in order to impart the drive shaft a rotational impulsion, as well as actuating mechanical means acting on said disk for the accomplishment, as a result of said rotational impulsion, of an operating cycle comprising the steps of arranging the punches in their operating position and, after a predetermined number of strokes of the ram, of returning the same

- 6 -

to their rest position.

Further features and advantages of the invention will become more apparent from the detailed description of a preferred but not exclusive embodiment of a device to periodically actuate one or more punches in a press, given hereinafter by way of non-limiting example with reference to the accompanying drawings in which:

- Fig. 1 is an interrupted and partly sectional view of a pressing station embodying the device of the invention;

- Fig. 2 is a top view of said device;

- Fig. 3 shows the extension of the toothing present on the initiation collar being part of the device;

- Fig. 4 shows the extension of the toothing present in the entraining collar being part of the device;

- Figs. 5 to 13 diagrammatically show the different toothings engaged according to the succession of operating steps in the device in question;

- Fig. 14 diagrammatically shows the station seen in Fig. 1 in which the press ram is lowered and the punches are in a rest condition;

- Fig. 15 diagrammatically shows the station seen in Fig. 1 in which the press ram is raised and the punches are arranged so that they can be brought to an operating condition;

- Fig. 16 diagrammatically shows the station seen in Fig. 1 in which the press ram is lowered and the punches are going to perforate a lamination;

- Fig. 17 is a section taken along the line XVII-XVII of Fig. 6

- Fig. 18 is a section taken along the line XVIII-XVIII of Fig. 10.

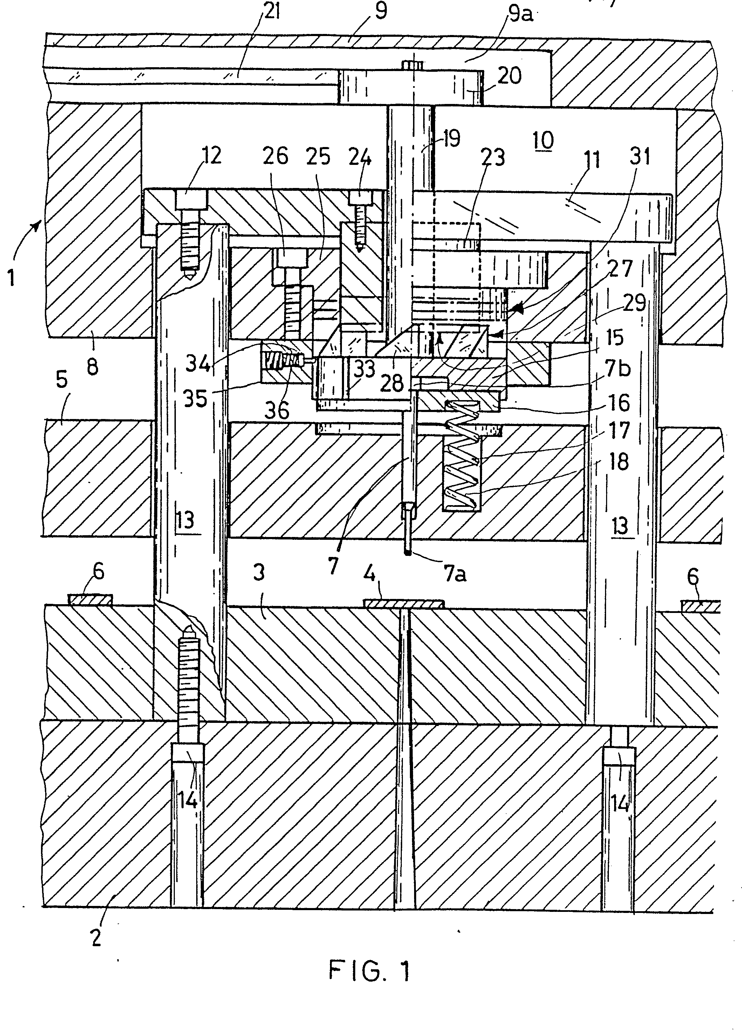

Referring to the drawings and particularly to Fig. 1, a device to periodically actuate one or more punches in a press has been globally identified by reference numeral 1.

In the embodiment shown, the device 1 is associated with a press adapted to produce and pack laminations used in electronical equipments. In greater detail, device 1 is provided to be mounted in an operating station in which the piercing of the laminations designed to form the ends of packs is carried out.

Said operating station in short comprises a fixed bed 2 located at the bottom, to which a die 3 is secured in known manner. A plate strip 4 shown in cross-section, from which the laminations have to be obtained is fed stepwise to said die 3 in synchronism with the press movements.

Above said plate strip moves a guide plate 5 provided with reciprocating motion in the direction of die 3 and elastically supported, in known manner, with respect to the press ram not shown as known per se.

In addition, one or more stop members 6 having a slightly higher thickness than the plate strip 4 are disposed on the die 3.

In the guide plate 5 at least a punch 7 provided with a penetration point 7a protruding in the direction of the die 3 is slidably engaged. Punch 7 is driven, as more clearly explained in the following, by the device 1 and is movable relative to the guide plate 5 from an operating position in which the penetration point 7a protrudes from the guide plate 5 towards the die 3, to a rest position in which the penetration point 7a is hidden inside the guide plate 5.

In an original manner, device 1 comprises a support plate 8 elastically supporting the guide plate 5 and secured, by the interposition of a covering plate 9 and in a conventional manner, to the press ram.

Furthermore, said support plate 8 is provided, on its side facing the ram, with a recess 10 within which a crosspiece 11 is slidably engaged. The latter is rigidly supported by means of screws 12, by at least two posts 13 in turn fastened to bed 2 by screws 14. As is possible to note, posts 13 pass through die 3 and are slidably engaged by the guide plate 5 and the support plate 8.

A disk 15 oscillatably engaged between the guide plate 5 and the support plate 8 is also provided and it is designed to rigidly support punch 7 at the end 7b thereof opposite the penetration point 7a. In greater detail, end 7b has a swollen configuration and is engaged between disk 15 and an auxiliary plate 16 rotatably engaged with the disk 15 and urged against the same by at least a spring 17 accommodated in a housing 18 located in the upper part of the guide plate 5.

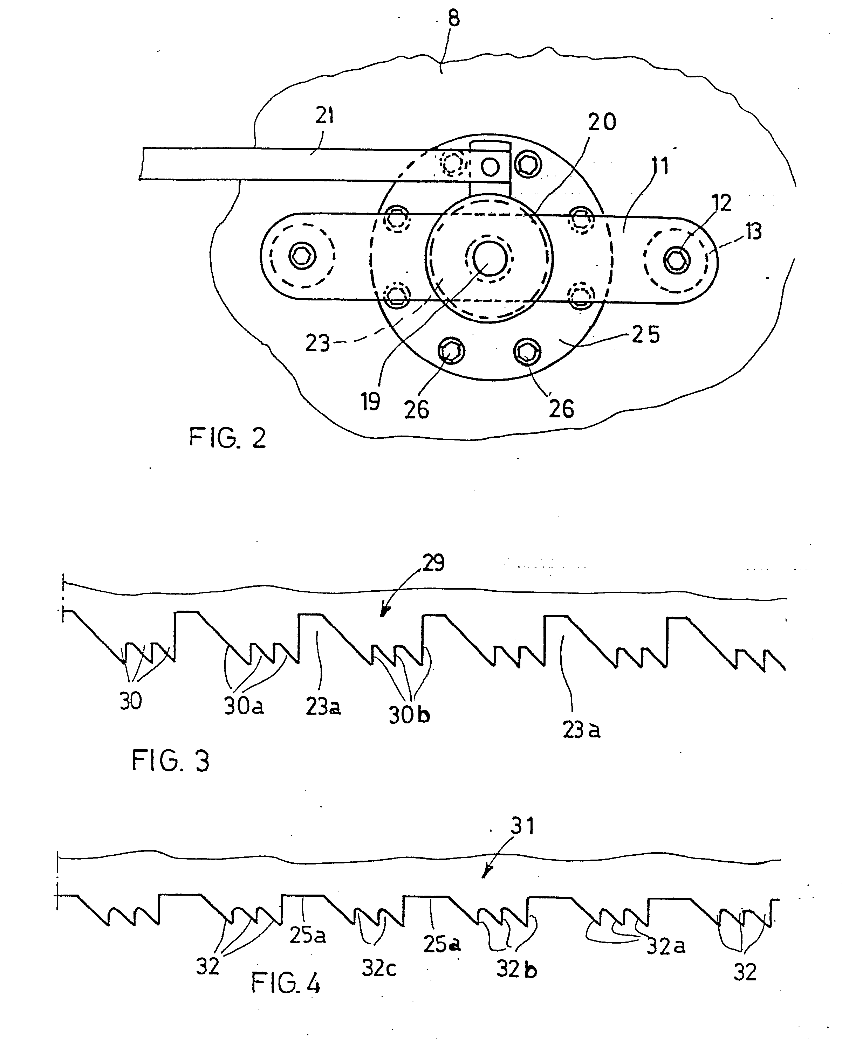

On the opposite side with respect to punch 7 extends a drive shaft 19, coaxial with disk 15 and integral thereto, which slidably passes through crosspiece 11 and is provided with a free-wheel 20 at its end opposite the disk 15. As shown in Fig. 2, an actuating bar 21 is engaged with said free-wheel so that it connects the latter to fluid-operated actuating means interlocked to a control unit and comprised for example of an air cylinder not shown in the figure as known in itself.

As visibile in the figure, the free-wheel 20 and actuating bar 21 are oscillatably housed in a second recess 9a located in the lower part of the support plate 9. Advantageously the fluid-operated actuating means cooperates with the free-wheel 20 in order to impart the drive shaft 19 a rotational impulsion, upon command of the above mentioned control unit . Following said impulsion, mechanical actuating means globally identified by reference numeral 22 brings about the operating positioning of punch 7 as well as automatically the repositioning thereof to a rest condition after a given number of strokes of the ram.

Advantageously, mechanical operating means 22 comprises an initiation collar 23, an entraining collar 25 and a feeding toothing 27. As visible, the initiation collar 23 is fastened by screws 24 underneath the crosspiece 11 and slidably engaged by the drive shaft 19. The entraining collar 25 is fastened by screws 26 to the support plate 8 and slidably engaged around the initation collar 23. The feeding toothing 27 in turn comprises a number of feeding

- 10 -

teeth 28 disposed on the circumferential surface of disk 15 facing the drive shaft 19, according to a predetermined pitch.

In greater detail, the initiation collar 23 is provided, on its side facing the disk 15, with an initiation toothing 29, particularly shown in Fig. 3. Said initiation toothing 29 is comprised of a plurality of initiation teeth 30 distributed all over its circumference in groups spaced apart from each other by a distance corresponding to the pitch of the feeding teeth 28. Each tooth has an inclined side 30a and a substantially upright side 30b. In the embodiment shown said initiation toothing 29 is provided to be composed of six groups of teeth comprising each three initiation teeth 30. In the initiation collar 23, between each two groups, a housing 23a is created for the engagement of one of the feeding teeth 28, as more clearly explained in the following.

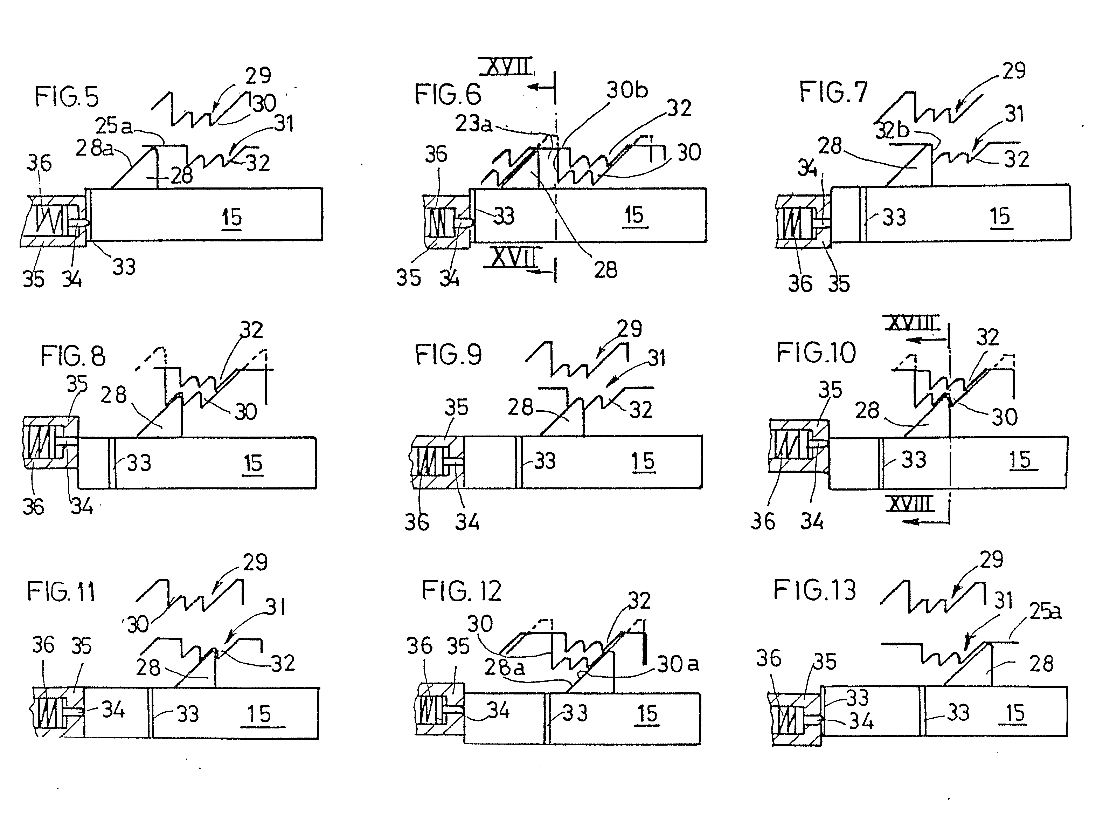

Likewise, the entraining collar 25 is provided, along its surface 25a facing the disk 15, with an entraining toothing 31 (see Fig. 4) consisting of a plurality of entraining teeth 32 disposed in a circumferential manner like the initiation teeth 30, but offset by a small pitch fraction with respect to the latter, as clearly seen in Figs. 5 to 13. Like the initiation teeth 30, also the entraining teeth 32 have each an inclined side 32a and a substantially upright side 32b. Furthermore (see Fig. 4) the bottom 32c of teeth 32 projects with respect to the lower surface 25a of the entraining collar 25 for the purposes to be described in the following.

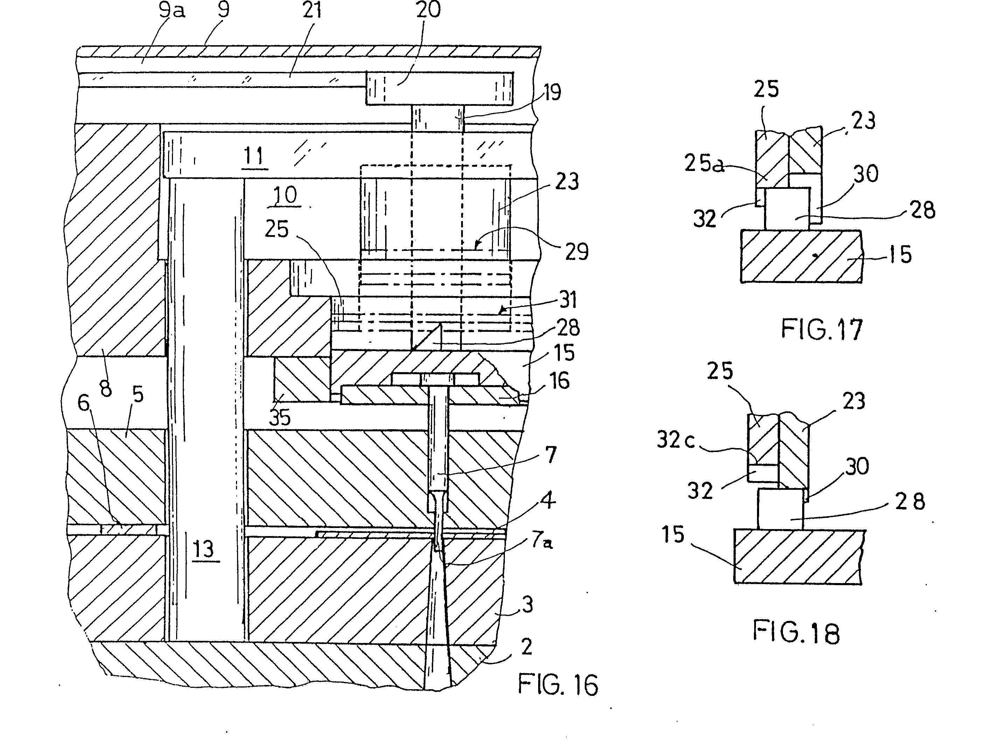

The feeding toothing 27 in turn comprises six feeding teeth 28 which, as shown in Figs. 17 and 18, have a width substantially equal to the added widths of the initiation teeth 30 and entraining teeth 32. Furthermore, each tooth has an inclined side 28a (Fig. 5) disposed parallelly to sides 30a and 32a of teeth 30 and 32.

In a preferred embodiment a series of grooves 33 are also provided on the disk 15 which are each oriented according to a generatrix of the disk itself and spaced apart according to a pitch identical with that of the feeding teeth 28. Said grooves are designed to be selectively engaged, as more clearly explained in the following, by at least a stop member 34 housed in an annular support 35 fastened to the underneath of the support plate 8. In greater detail, the stop member 34 is slidably engaged in a housing located on the annular support 35 and elastically urged against the disk 15 by a compression spring 36 accommodated in the housing itself. Advantageously the control unit is also provided to be interlocked to a device for measuring the thickness of the plate strip 4, as the latter moves forward in the direction of the press. In a preferred embodiment such a device is of the induction type.

Operation of the device according to the invention described above mainly as regards structure, is as follows, reference being made to Figs. 5 to 13 in which the mutual positioning of the mechanical actuating meas 22 in the different operative steps is shown.

More particularly, for the sake of clearness, only one tooth, a single group of initiation teeth and a single group of entraining teeth have been shown. Furthermore, referring particularly to Figs. 6, 8, 10 and 12, it should be understood that the mutual positioning seen therein is achieved as a result of the raising of disk 15 and entraining collar 25 and not of an actual lowering of the initiation collar 23, as it might seem on looking at said figures.

The press ram in its reciprocating motion entrains the parts connected thereto,i.e. the covering plates 9, the support and guide plates 8 and 5, as well as the entraining collar 25, the disk 15 and the parts engaged therewith. Viceversa, the parts connected to the bed 2, i.e. the die 3, posts 13, crosspiece 11 and initiation collar 23, remain stationary.

When punch 7 has to hold its rest position, disk 15, urged by the spring 17 is provided to maintain its feeding teeth 28 in abutment against the lower surface 25a of the entraining collar 25,each tooth having its side 28a close to the side 32a of the adjacente tooth 32 (see Fig. 5).

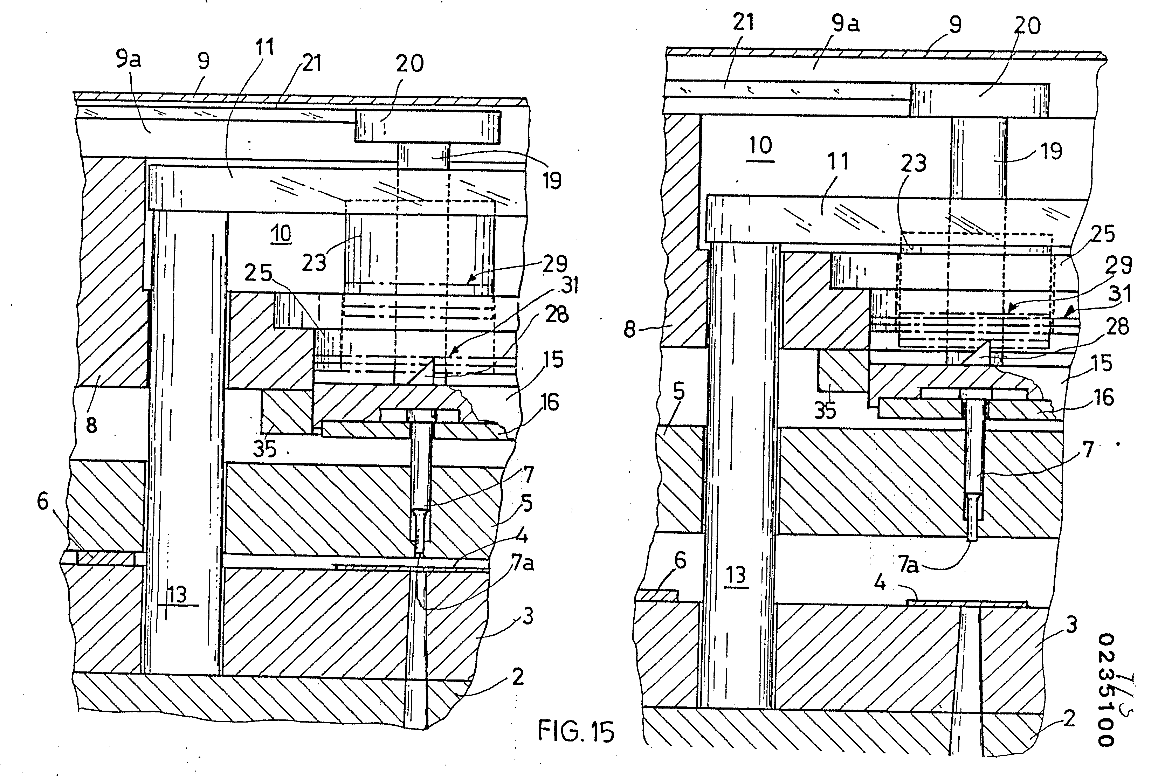

This arrangement, to which the rest positioning of punch 7 corresponds, is ensured by the engagement of the stop member 34 with one of grooves 33 and is maintained unchanged during the whole backward and forward stroke of the ram. This is clearly visible in Fig. 5 to which the bottom dead centre of the ram shown in Fig. 14

- 13 -

corresponds, and in Fig. 6 to which corresponds the top dead centre of the ram.  In the last mentioned figure it is possible to notice that disk 15, carried along during the ram ascent, has brought the feeding teeth 28 close to housings 23a located in the  collar 23. Said housings are shaped in such a way that they do not interfere with the feeding  teeth  28  which  remain in abutment against surface 25a.

The above described situation remains unchanged until the control unit, depending upon the received programming as  well as upon the data coming from the measuring device associated therewith, causes the actuation of the fluid-operated actuating means. Said actuation which preferably takes place at the bottom dead centre of the ram, gives the  drive shaft 19 a rotational impulsion, as mentioned above, to which a rotation of disk 15 corresponds (see Fig. 7). As a result the latter brings tooth 28 into abutment against the first entraining tooth 32. At the same time the disengagement between the groove 33 and the stop member 34 takes place, in contrast to the action exerted by the compression spring 36.

At the following ascent stroke of the ram  (see Fig. 8) each feeding tooth 28 engages between the two first initiation teeth 30. So while the ram, at its top dead center, reverse its movement, the disk 15 is retained by the initiation collar 23 and the punch is arranged so that it can reach its operative position, as clearly shown in Fig. 15. At the same time the offsetting existing between the entraining teeth 32 and initiation teeth 30 causes a further rotation of disk 15 as a

- 14 -

result of the slidable engagement between sides 28a and 30a of the feeding and initiation teeth 28 and 30 respectively.

Owing to this further rotation, the feeding tooth 28 is arranged to be engaged, at the following ram descent, between two adjoining entraining teeth 32, as shown in Fig. 9. In this figure it is possible to notice that the upper end of tooth 28 is in abutment against the bottom 32c. As a result, when the ram is located at its bottom dead center, the disk 15 is disposed (see Fig.16) in a position to which corresponds the penetration of punch 7 into the plate strip 4.

Referring to Figs. 10 and 11, similarly to what described above, the following up and down strokes of the ram give rise to a further rotation of disk 15 and to a new cutting blow by punch 7.

Afterwards, during the new upstroke of the ram, tooth 28 abuts against the side 30a of the last initation tooth in the corresponding group (see Fig. 12), which involves a new rotation of disk 15 which is again disposed in abutment against the surface 25a of the entraining collar 25.

Thus the operative conditions described with reference to Figs. 5 and 6 are re-established and they will be maintained until the control unit actuates the fluid-operated actuating means again.

The present invention attains the intended purposes.

Practical tests have proved that the device in question is capable of perfectly running even at the highest operating speed of the press on which it is mounted. This advantage is due to the fact that, unlike the solutions of the known art, the return of punches to their rest position is completely independent of any control by the fluid-operated actuated means. The function of the latter is restrained to starting the operative cycle which will then be executed by the mechanical actuating means 22. As a result, said fluid-operated actuating means during the cycle has sufficient time to reestablish its starting position.

Practically, the device in question allows presses on which it is mounted to be used at their maximum safety speed, which is now in the range of 600 blows per minute.

Furthermore and advantageously, the measuring device associated with the control unit allows the obtention of packs falling within the size tolerances even when the plate strip 4 is subjected to important thickness variations over the all length thereof. This is due to the fact that, by virtue of this device, the formation of the packs is carried out taking into account the thicknesses of the single laminations and not, as it occurs in other applications, by counting the ram blows or the number of the packed laminations.

Obviously the device as conceived is susceptible of many modifications and variations, all falling within the inventive idea characterizing it. It is particularly pointed out that the initiation, entraining and feeding

- 16 -

toothings can be composed of any number of teeth disposed in any manner, depending upon the characteristics of the operative cycle it is wished to obtain. Attention is also drawn to the fact that the device in question can be mounted on any type of press.

Claims

1. A device to periodically actuate one or more punches in a press, in which the workpiece (4) is interposed between a die (3) supported by the fixed bed (2) and a guide plate (5) connected by the interposition of spring means to a ram provided with reciprocating motion in the direction of said die (3), said punches (7) slidably crossing the guide plate (5) and being movable from an operating position in which they protrude from the guide plate (5) in the direction of said die (3), each in the region of a penetration point (7a) thereof, to a rest position in which said penetration point (7a) is hidden inside said guide plate (5), characterized in that it comprises a support plate (8) secured underneath the ram and elastically supporting said guide plate (5), at least two posts (13) fastened to said bed (2) with which the guide plate (5) and support plate (8) slidably engage, a crosspiece (11) rigidly supported by said posts (13) and slidably engaging within a recess (10) provided in said support plate (5) on the same side as the ram, a disk (15) oscillatably engaged between said support plate (8) and said guide plate (5) and supporting said punches (7) on its face oriented towards the guide plate (5), a drive shaft (19) coaxially and rigidly engaged with said disk (15) on the side thereof opposite said punches (7) and slidably crossing said crosspiece (11), a free-wheel (20) mounted on said drive shaft (19) and connected through an actuating bar (21) to fluid-operated actuating means in order to impart the drive shaft (19) a rotational impulsion, as well as actuating mechanical means (22) acting on said disk (15) for the accomplishment, as a result of said rotational impulsion, of an operating cycle comprising the steps of arranging the punches (7) in their operating position and, after a predetermined number of strokes of the ram, of returning the same to their rest position.

2. A device according to claim 1, characterized in that said actuating mechanical means (22) comprises: an entraining collar (25) rigidly carried by said support plate (8) coaxially to said drive shaft (19), and provided,along its surface (25a) facing said disk (15), with an entraining toothing (31) comprised of at least two entraining teeth (32) circumferentially distributed in groups spaced apart from each other and exhibiting each an inclined side (32a) as well as a bottom portion (32c) projecting with respect to said surface (25a) of the entraining collar (25), towards the disk (15); an initiation collar (23) rigidly fastened underneath said crosspiece (11), slidably engaged between said drive shaft (19) and said entraining collar (25) and provided, along its surface facing the disk (15), with an initiation toothing (29) comprised of at least two initiation teeth (30) distributed in the same manner as said entraining teeth (32) and offset with respect to the same by a predetermined fraction of their pitch,said teeth exhibiting each an inclined side (30a); and a feeding toothing (27) comprising at least a feeding tooth (28) disposed on the circumferential surface of disk (15) facing the drive shaft (19) and engageable, during the operating cycle, at the top dead center of said ram, with said initiation teeth (30), as well as, on the ram downstroke,selectively, either - during the operating cycle - with said entraining teeth (32) to which the operative positioning of punches (7) corresponds, or - at the end of the operating cycle - with the lower surface (25a) of the entraining collar (25), to which the rest positioning of punches (7) corresponds, said feeding teeth (28) exhibiting each an inclined side (28a) disposed parallelly to sides (30a) and (32a) of said initiation teeth (30) and entraining teeth (32) respectively.

3. A device according to claim 1, characterized in that it further comprises a covering plate (9) interposed between said support plate (8) and said ram and exhibiting a second recess (9a) inside which said actuating lever (21) and free-wheel (20) oscillatably engage.

4. A device according to claim 1, characterized in that said disk (15) is provided with at least a groove (33) oriented according to a generatrix of the disk (15) itself, and engageable in a removable manner by a stop member (34) carried by said support plate (8) and elastically urged towards the disk (15).

5. A device according to claim 1, characterized in that it further comprises at least a spring (17) interposed between said guide plate (5) and said disk (15) and acting in such a way that it urges the disk (15) towards the support plate (8).

6. A device according to claim 2, characterized in that a plurality of said feeding teeth (28) spaced apart according to a predetermined pitch is provided on said disk (15), said groups of initiation teeth (30) and entraining teeth (32) being spaced apart from each other by the same distance as the pitch of the feeding teeth (28).

7. A device according to claims 1 and 5, characterized in that said punches (7) are engaged, each in the region of a swollen end (7b) thereof opposite the penetration point (7a), between said disk (15) and an auxiliary plate (16) rotatably engaged with the disk (15) and urged against the same by said spring (17).

FIG. 1

FIG. 2

21  20  11  12  13

8

23  25

19  26  26

FIG. 3

29

30  30a  23a  30b  23a

FIG. 4

31

32  25a  32c  25a  32b  32a  32

FIG.5

FIG.6

FIG.7

FIG.8

FIG.9

FIG.10

FIG.11

FIG.12

FIG.13

FIG.15

0235100

0235100

FIG.16

FIG.17

FIG.18